(19) **Europäisches Patentamt**

**European Patent Office**

**Office européen des brevets**

(11) **EP 1 078 305 B1**

(12) **EUROPÄISCHE PATENTSCHRIFT**

(45) Veröffentlichungstag und Bekanntmachung des Hinweises auf die Patenterteilung:
**19.02.2003 Patentblatt 2003/08**

(21) Anmeldenummer: **99920816.8**

(22) Anmeldetag: **29.04.1999**

(51) Int Cl.⁷: **G05B 19/401**

(86) Internationale Anmeldenummer:
**PCT/EP99/02909**

(87) Internationale Veröffentlichungsnummer:
**WO 99/059038 (18.11.1999 Gazette 1999/46)**

(54) **KOORDINATENMESSGERÄT UND VERFAHREN ZUR STEUERUNG EINES SOLCHEN**

COORDINATE MEASUREMENT DEVICE AND METHOD FOR CONTROLLING SAME

APPAREIL DE MESURE DE COORDONNEES ET PROCEDE POUR EN ASSURER LA COMMANDE

(84) Benannte Vertragsstaaten:
**DE FR GB IT**

(30) Priorität: **13.05.1998 DE 19821372**

(43) Veröffentlichungstag der Anmeldung:
**28.02.2001 Patentblatt 2001/09**

(73) Patentinhaber:
• **Carl Zeiss**
  **89518 Heidenheim (Brenz) (DE)**
  Benannte Vertragsstaaten:
  **DE FR IT**
• **Carl-Zeiss-Stiftung, trading as Carl Zeiss**
  **89518 Heidenheim (Brenz) (DE)**
  Benannte Vertragsstaaten:
  **GB**

(72) Erfinder:
• **GUTH, Thomas**
  **D-73560 Böbingen (DE)**
• **CZEPAN, Bernd**
  **D-89522 Heidenheim (DE)**

(56) Entgegenhaltungen:
**EP-A- 0 569 694**      **EP-A- 0 769 677**
**DE-A- 3 234 241**      **DE-A- 4 006 949**
**DE-A- 4 336 863**      **US-A- 5 434 803**

EP 1 078 305 B1

**Beschreibung**

Die Erfindung betrifft ein Koordinatenmeßgerät mit einem in den Koordinatenrichtungen verfahrbaren Taster zum Abtasten eines Werkstückes, einer Mechanik mit Antrieben, über die der Taster verfahren wird sowie einer Steuereinheit zur Steuerung der Mechanik.

Derartige Koordinatenmeßgeräte sind bereits seit langem bekannt und werden in den unterschiedlichsten Bauformen angeboten. Beispielsweise kann es sich hierbei um ein Koordinatenmeßgerät vom sogenannten Portaltyp mit einer Portalmechanik handeln, bei dem ein Portal einen Meßtisch überspannt, wobei das Portal in einer ersten Koordinatenrichtung beweglich auf dem Meßtisch geführt ist und über entsprechende Antriebe, wie beispielsweise Reibradantriebe oder Spindelantriebe bewegt werden kann. Im überspannenden Teil des Portals ist hierbei ein sogenannter Querschlitten angeordnet, der ebenfalls über Antriebe in einer zweiten Koordinatenrichtung entlang dem überspannenden Teil des Portals bewegt werden kann. An dem Querschlitten seinerseits ist nunmehr in der dritten Koordinatenrichtung eine vertikal ausgerichtete Pinole geführt, an deren unteren Ende sich ein Taster befindet, mit dem ein zu vermessendes Werkstück abgetastet werden kann. Bei den Tastern kann es sich hierbei um berührende Taster handeln, die das Werkstück mechanisch antasten, wobei die Antastung über eine Auslenkung des Tasters erfaßt wird, oder beispielsweise um optische Taster, mit denen die Oberfläche des zu vermessenden Werkstückes optisch abgetastet wird.

Eine andere relativ weit verbreitete Bauform von Koordinatenmeßgeräten sind die sogenannten Ständermeßgeräte mit einer Ständermechanik, bei denen eine vertikal ausgerichtete Säule entlang einem Meßtisch beweglich geführt ist und über Antriebe verstellt werden kann. An der Säule ist in vertikaler Richtung ein sogenannter Kreuzschieber beweglich geführt, an dem seinerseits ein horizontal ausgerichteter Meßarm beweglich geführt ist, an dessen Ende sich der besagte Taster befindet. Auch dieses Koordinatenmeßgerät wird über entsprechende Antriebe verfahren.

Zur Steuerung derartiger Koordinatenmeßgeräte sind üblicherweise Steuereinheiten vorgesehen, die beispielsweise aus einem Eingabe- und Auswerte-Rechner und einer separaten Steuerung bestehen, in der die hardware-nahen Funktionen zur Steuerung der Mechanik des Koordinatenmeßgerätes realisiert sind. Die Verfahrwege und Auswertungsvorschriften werden hierbei üblicherweise auf dem besagten Rechner definiert. Zur konkreten Definition der Verfahrwege, die insbesondere zur Abtastung des Werkstückes abgefahren werden, werden üblicherweise sogenannte Geometrieelemente definiert, anhand derer die zu vermessende Geometrie des Werkstückes nachgebildet wird.

Die Geometrieelemente stellen hierbei die kleinstmöglichen definierbaren geometrischen Einheiten dar, anhand derer die tatsächlich abzutastende Geometrie des zu vermessenden Werkstückes nachgebildet wird, und auf Basis deren die tatsächlich auf der Werkstückoberfläche abzutastenden Punkte definiert werden. Eine übliche Zusammenstellung derartiger Geometrieelemente sind der Punkt, der Kreis, der Zylinder, der Kegel, die Kugel, die Ellipse, die Ebene, die Gerade, der Torus und der Paraboloid, sowie die Kurve und die Freiformfläche.

Über diese Sammlung von Geometrieelementen werden bei Koordinatenmeßgeräten die auf der Werkstückoberfläche abzutastenden Punkte definiert.

Bei bislang bekannten Koordinatenmeßgeräten wurde hierbei das Geometrieelement sowie die auf dem besagten Geometrieelement abzutastenden Punkte immer bezogen auf ein gemeinsames Referenz-Koordinatensystem, z.B. das Maschinenkoordinatensystem des Koordinatenmeßgerätes oder das Werkstück-Koordinatensystem des zu vermessenden Werkstückes rückbezogen. Ein solcher Rückbezug auf ein gemeinsames Koordinatensystem ist während der Durchführung des Meßablaufes zwingend erforderlich, da sonst der Taster nicht entsprechend verfahren werden kann.

Die Speicherung der abzutastenden Punkte relativ zum Referenz-Koordinatensystem hatte jedoch die Besonderheit, daß jedes Mal bei einer Änderung der Werkstückgeometrie und damit auch der Geometrieelemente, die hierauf abzutastenden Punkte vollkommen neu definiert werden mußten. Da jedoch in verschiedenen Produktstadien oder in Teilefamilien häufig kleine Änderungen an der Geometrie des zu vermessenden Werkstückes vorgenommen werden, führt dies zu einem hohen Programmieraufwand und zwar insbesondere dann, wenn die abzutastenden Punkte auf dem betreffenden Geometrieelement in mühevoller Programmierarbeit manuell eingegeben worden sind.

Die Deutsche Offenlegungsschrift DE 40 06 949 A1 zeigt ein Verfahren zum Punktweisen Abtasten der Oberfläche eines Werkstückes. Hierbei werden zunächst alle abzutastenden Punkte definiert, indem mit einem manuell geführten Koordinatenmeßgerät auf einem Musterwerkstück die betreffenden abzutastenden Punkte eingelesen werden. Aus diesen eingelesenen Punkten werden dann vollautomatisch alle Bahnpunkte eines automatisierten Meßablaufes für ein CNC-Koordinatenmeßgerät generiert. Damit werden also in dem gezeigten Verfahren keine gesonderten Geometrieelemente verwendet. Andererseits sind sämtliche auf der Oberfläche des Werkstückes abzutastenden Punkte nur bezogen auf ein einziges gemeinsames Koordinatensystem abgespeichert.

Aufgabe der vorliegenden Erfindung ist es hiervon ausgehend ein Koordinatenmeßgerät sowie ein zugehöriges Verfahren zur Steuerung eines solchen Koordinatenmeßgerätes anzugeben, mit dem die Verfahrwege leichter geändert werden können.

Die Aufgabe wird hierbei durch die Merkmale der unabhängigen Ansprüche 1 und 6 gelöst.

Der Grundgedanke der Erfindung ist hierbei darin zu sehen, daß die Punktparameter über auf den Geometrieelementen abzutastende Punkte bezogen auf ein dem betreffenden Geometrieelement eigenes Koordinatensystem abgespeichert sind. Hierdurch stehen die einzelnen abzutastenden Punkte des Geometrieelementes in einer festen Beziehung zu dem besagten Geometrieelement-Koordinatensystem, so daß die Sollgeometrie des Werkstückes leicht geändert werden kann.

Um das dem Geometrieelement eigene Geometrieelement-Koordinatensystem eindeutig zu definieren sind im Speicher der Steuereinheit zusätzlich jedem Geometrieelement zugeordnet Parameter über die Ablage des Geometrieelement-Koordinatensystems und/oder Parameter über die Ausrichtung des Geometrieelement-Koordinatensystems gegenüber einem gemeinsamen Referenz-Koordinatensystem abgespeichert. Hierdurch erhält jedes Geometrieelement als solches bezogen auf ein gemeinsames Referenz-Koordinatensystem eine eindeutige Ablage und Ausrichtung. Hierdurch kann ein einmal definiertes Geometrieelement gemeinsam mit den abzutastenden Punkten problemlos an unterschiedlichen Stellen auf dem Werkstück positioniert und gedreht werden, ohne hierzu das Geometrieelement und die abzutastenden Punkte neu eingeben zu müssen. Bei einer solchen Lageänderung des Geometrieelementes werden nur die Parameter der Ablage des Geometrieelement-Koordinatensystems und/oder der Ausrichtung gegenüber dem gemeinsamen Referenz-Koordinatensystem verändert.

Eine besondere Problemstellung ergibt sich zusätzlich bei einigen Geometrieelementen, wenn die Dimension des Geometrieelementes verändert wird, da bei einer entsprechenden Änderung der Dimensionen die abzutastenden Punkte dann möglicherweise nicht mehr auf der Oberfläche bzw. der Linie des Geometrieelementes liegen. Wird beispielsweise der Durchmesser eines Kreises geändert, so liegen ohne entsprechende Maßnahmen die abzutastenden Punkte nach der Änderung nicht mehr auf der Kreislinie. Gemäß einer besonders vorteilhaften Weiterbildung des erfindungsgemäßen Verfahrens werden bei einer Änderung der Dimensionen eines Geometrieelementes deshalb die Parameter bezüglich der auf dem Geometrieelement abzutastenden Punkte derart abgeändert, daß der lotrechte Abstand jedes abzutastenden Punktes vom Geometrieelement konstant bleibt.

Weitere Vorteile und Weiterbildungen der Erfindung ergeben sich aus den Figuren.

Hierin zeigen:

Figur 1 eine schematische Darstellung eines erfindungsgemäßen Koordinatenmeßgerätes;

Figur 2 eine schematische Darstellung eines Verfahrens zur Durchführung eines automatisierten Meßablaufes

Figur 3 ein zu vermessendes Werkstück für das mehrere abzutastende Geometrieelemente definiert sind;

Figur 4 das Werkstück gemäß Figur 3, bei dem die Position und die Größe einer Bohrung geändert wurde;

Figur 5 eine Freiformfläche f im Schnitt, deren Form geändert wurde;

Figur 6 ein Kreis (k2), dessen Radius geändert wurde.

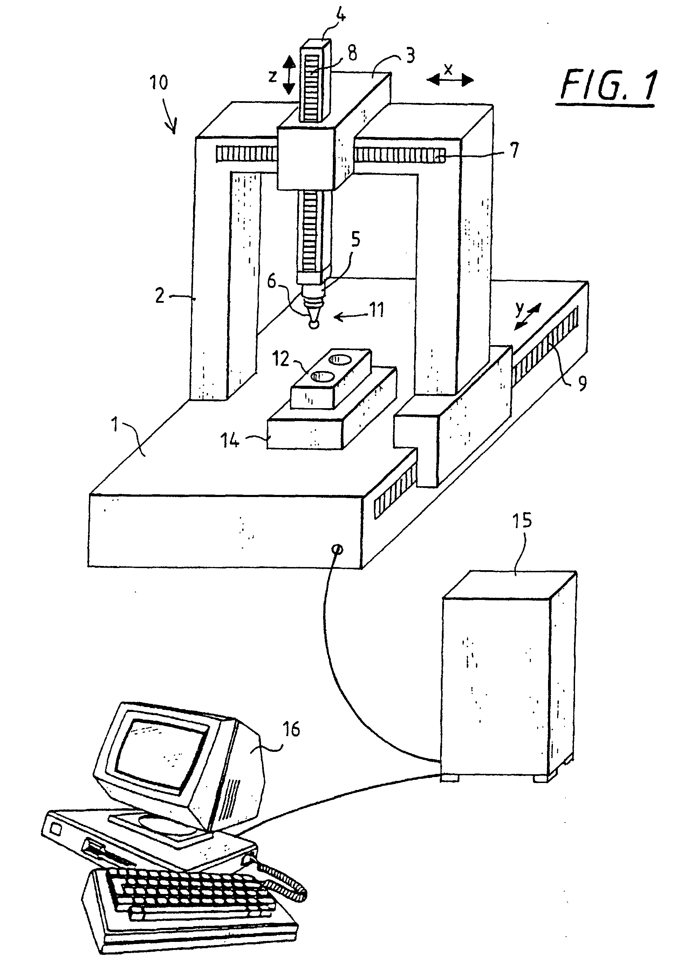

Figur 1 zeigt ein erfindungsgemäßes Koordinatenmeßgerät das hierbei rein beispielhaft in Form eines Portalmeßgerätes mit einer Portalmechanik (10) und einem mechanisch arbeitenden Taster (11) gezeigt ist. Das Koordinatenmeßgerät umfaßt einen Werkstücktisch (1), auf dem ein Portal (2) in Richtung des Pfeiles (Y) beweglich gelagert ist. Das Portal (2) wird hierbei rein beispielhaft über einen nicht näher gezeigten Reibradantrieb angetrieben und kann seine genaue Position in Richtung des Pfeiles (Y) durch die Abtastung des Maßstabes (9) erfassen. In dem den Meßtisch (1) überragenden Teil des Portales (2) ist ein Querschlitten (3) in Richtung des Pfeiles (X) beweglich gelagert, der ebenfalls über entsprechende Antriebe angetrieben werden kann und in Richtung des Pfeiles (X) über die Abtastung des Maßstabes (7) seine genaue Position bestimmen kann. An dem Querschlitten (3) seinerseits ist die Pinole (4) in Richtung des Pfeiles (Z) beweglich gelagert, wobei die Pinole (4) ebenfalls über entsprechende Antriebe bewegt werden kann und die genaue Position durch Ablesen des Maßstabes (8) bestimmt werden kann. Am unteren Ende der Pinole befindet sich ein Taster (11) in Form eines Tastkopfes (5), an dem ein Taststift (6) zum Abtasten des Werkstückes (12) befestigt ist. Als Steuereinheit zur Steuerung des Koordinatenmeßgerätes ist eine Steuerung (15) vorgesehen, die die hardware-nahen Steuerfunktionen und die Meßwertaufnahme des Koordinatenmeßgerätes vornimmt, sowie ein Rechner (16), in dem die Verfahrwege des Tastkopfes (5) bzw. des Taststiftes (6) in den Koordinatenrichtungen (X, Y, Z) festgelegt werden sowie die in einem Meßablauf erzielten Meßergebnisse ausgewertet werden.

Die Steuerung eines solchen Koordinatenmeßgerätes ist rein beispielhaft in unserem US-Patent Nr. 5,471,406 beschrieben.

Der Rechner (16) seinerseits ist hierbei ein Standard PC mit wenigstens einem Bildschirm, einer CPU, einer Festplatte, einem Arbeitsspeicher, einer Tastatur, sowie einer Schnittstellenkarte, über die der Rechner (16) mit der Steuerung (15) komuniziert. Der Aufbau eines solchen Rechners sowie die Funktionsweise sind dem hier angesprochenen Fachmann bereits so eingängig bekannt, so daß hier auf eine Zeichnung der Einzelkomponenten des Rechners, die ohne Informationsgehalt wäre, verzichtet wird. Wenn im nachfolgenden Text einzelne Funktionen, die im Rechner (16) stattfinden, erläutert werden, so sei nochmals ausdrücklich klargestellt, daß die Funktionen über Programme realisiert sind, die sich zunächst auf der Festplatte befinden und während der Laufzeit in den Arbeitsspeicher geladen werden, von wo aus Sie dann die Komponenten des Rechners (16) steuern. Die Daten, die während der Ausführung der Programmes aufgenommen oder verarbeitet werden, z.B. die Parameter der zu vermessenden Geometrieelemente, befinden sich während der Benutzung des Koordinatenmeßgerätes zunächst ebenfalls im Arbeitsspeicher und werden spätestens vor dem Ausschalten des Rechners (16) in entsprechenden Dateien auf der Festplatte gesichert.

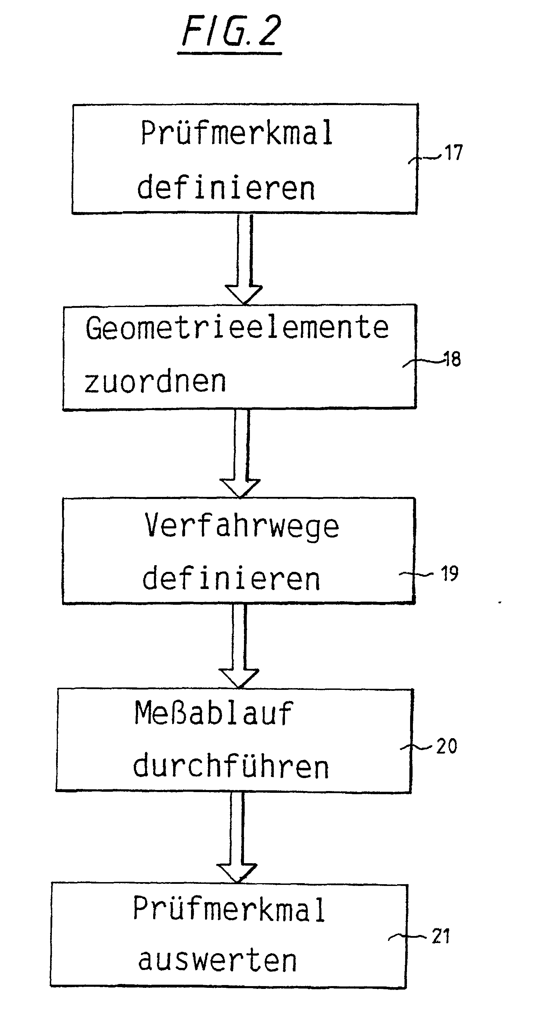

Die Erstellung, Durchführung und Auswertung eines Meßablaufes soll nunmehr anhand von Figur 2 beschrieben werden. Zur Eingabe der Verfahrwege wird zunächst einmal in einem Schritt (17) ein zu messendes Prüfmerkmal definiert, das an dem Werkstück (12) ausgewertet werden soll. Es kann sich hierbei beispielsweise um ein Maß eines Geometrieelementes oder die Sollabweichung des Geometrieelementes von seiner Sollform etc. handeln.

Dem Prüfmerkmal werden, nachdem eine Viehlzahl von Detailparametern gesetzt wurden, unter anderem in einem Schritt (18) zur Bestimmung des Prüfmerkmals notwendige abzutastende Geometrieelemente auf der Werkstückoberfläche zugeordnet. Nachdem die entsprechenden Geometrieelemente ausgewählt bzw. definiert wurden, werden in einem nächsten Schritt (19) die Verfahrwege definiert. Dazu werden zunächst auf den betreffenden Geometrieelementen abzutastende Punkte festgelegt. Dies wird realisiert, indem entweder ein entsprechendes Makro automatisch die abzutastenden Punkte mit den Zugehörigen, normal auf die Werkstückoberfläche weisenden Normalenvektoren generiert oder indem die abzutastenden Punkte mit den entsprechenden Normalenvektoren manuell eingegeben werden.

Außerdem werden die Verfahrwege für den Taster zu den unterschiedlichen abzutastenden Geometrieelementen festgelegt. Dies kann entweder ebenfalls manuell erfolgen, indem entsprechende Zwischenpunkte eingegeben werden oder aber automatisch, wobei dann das Programm die Verfahrwege-Generierung erledigt.

Die erstellten Daten werden dann gemeinsam mit einer Vielzahl an hier nicht näher erläuterten Parametern an die Steuerung (15) des Koordinatenmeßgerätes übergeben um hier gemäß Schritt (20) den Meßablauf durchzuführen. Die Steuerung (15) stellt hierbei die Schnittstelle zwischen dem eigentlichen Koordinatenmeßgerät und dem Rechner (16) dar und realisiert neben der Ansteuerung der Antriebe, und des Tasters auch das Auslesen und weiterreichen der im Meßablauf aufgenommenen Meßwerte an den Rechner (16). Wie bereits oben ausgeführt ist eine solche Steuerung rein Beispielhaft in unserem US-Patent Nr. 5,471,406 beschrieben.

Die aufgrund des Meßablaufes erzielten Meßdaten werden in einem letzten Schritt (21) im Rechner (16) entsprechend der vordefinierten Prüfmerkmale ausgewertet.

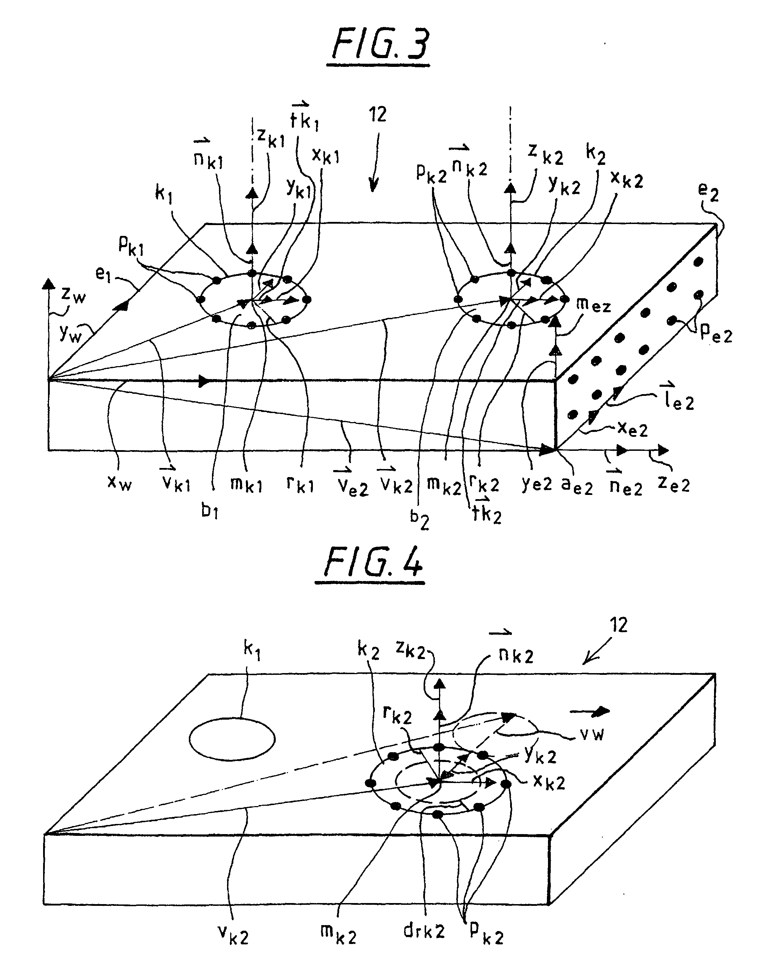

Anhand von Figur 3 soll nunmehr näher erläutert werden, wie bei einer Eingabe von Geometrieelementen und den dazugehörigen abzutastenden Punkten konkret vorgegangen wird. Dazu liege eine spezifische Meßaufgabe vor, wie sie beispielsweise in oben genannter, am selben Anmeldetag eingereichter Patentanmeldung beschrieben ist. Als konkrete abzutastende Geometrieelemente seien dazu zwei Kreise (k1, k2) sowie zwei Ebenen (e1, e2) des in Figur 3 gezeigten zu vermessenden Werkstückes (12) zu definieren. Dazu wird zunächst einmal die Ablage des Mittelpunktes (mk1) des Kreises (k1) bezogen auf das Werkstück-Koordinatensystem (xw, yw, zw) eingegeben. Diese Ablage wird in Form eines Vektors ($\overrightarrow{vk1}$) definiert. Der Mittelpunkt (mk1) des Kreises dient dem Programm hierbei gleichzeitig als Koordinatenursprung für das entsprechende Geometrieelemente-Koordinatensystem (xk1, yk1, zk1) dieses Kreises (k1). In einem nächsten Schritt wird die Ausrichtung des Geometrieelementes festgelegt. Dazu wird ein Normalenvektor ($\overrightarrow{nk1}$) definiert, der normal auf die Kreisfläche des zu definierenden Kreises (k1) steht. Der Normalenvektor ($\overrightarrow{nk1}$) wird hierbei gleichzeitig vom Meßprogramm als z-Achse (zk1) des besagten Geometrieelemente-Koordinatensystems (xk1, yk1, zk1) interpretiert. Außerdem wird ein zum Normalenvektor ($\overrightarrow{nk1}$) senkrechter zweiter Vektor ($\overrightarrow{tk1}$) definiert, der tangential zur Kreisfläche des Kreises (k1) ausgerichtet ist und die Ausrichtung der X-Achse (xk1) des Geometrieelemente-Koordinatensystems (xk1,yk1,zk1) repräsentiert. Dieser Vektor kann entweder vom Bediener definiert werden oder aber auch automatisch vom Rechner (16) gemäß einem vordefinierten Algorithmus gesetzt werden. Die Richtung der dritten Koordinaten (yk1) muß nicht explizit definiert werden, da sie sich automatisch aus den beiden anderen Koordinaten (xk1,zk1) ergibt und damit jederzeit vom Rechner (16) ermittelbar ist. Weiterhin wird der Radius (rk1) des Kreises (k1) angegeben, so daß hierdurch die Linie des abzutastenden Geometrieelementes vordefiniert ist. Hiernach werden die einzelnen abzutastenden Punkte (pk1) gemeinsam mit den Normalenvektoren (hier der übersichtlichkeithalber nicht gezeigt), die normal auf die Kreislinie zeigen, entweder manuell eingegeben oder aber durch ein Makro errechnet, wenn dies gewünscht ist.

Die besagten Daten, also die Ablage des Geometrieelement-Koordinatensystems (xk1,yk1,zk1) in Form des Vektors ($\overrightarrow{vk1}$), die Ausrichtung des Geometrieelement-Koordinatensystems gegenüber dem Referenz-Koordinatensystem (xw, yw, zw) in Form des Normalenvektors ($\overrightarrow{nk1}$) und des Tangentialvektors ($\overrightarrow{tk1}$), der Radius (rk1) des Kreises (k1), sowie die einzelnen abzutastenden Punkte (pk1) mit Normalenvektoren (hier nicht gezeigt) werden in entsprechenden dafür vorgesehenen Listen als Listeneintrag abgelegt. Vollkommen analog wird auch für den zweiten Kreis (k2) verfahren.

Hinsichtlich der Ebenen (e1, e2) wird ebenfalls ähnlich vorgegangen. Hierbei wird die Ablage des Ursprungs (ae2) des Geometrieelment-Koordinatensystems (xe2, ye2, ze2) über einen Vektor ($\vec{ve2}$) definiert, der gleichzeitig auf der Ebene liegt. In einem nächsten Schritt werden zwei Richtungsvektoren ($\vec{le2}$, $\vec{me2}$) festgelegt, die Tangential zur Ebene (e2) stehen und, über die die Ebene dann aufgespannt wird. Der erste dieser Richtungsvektoren ($\vec{le2}$) wird vom Programm hierbei automatisch als Richtungsvektor für die X-Achse (xe2) des betreffenden Geometrieelement-Koordinatensystems gewählt. Obwohl dies eigentlich überflüssig wäre, wird zusätzlich ein Normalenvektor ($\vec{ne2}$) eingetragen, der normal auf die Ebene (e2) steht und damit gleichzeitig die z-Richtung (ze2) des betreffenden Geometrieelement-Koordinatensystems (xe2, ye2, ze2) vorgibt. Dieser Normalenvektor ($\vec{ne2}$) und der erste Richtungsvektor ($\vec{le2}$) geben damit die Ausrichtung des Geometrieelement-Koordinatensystems gegenüber dem Referenz-Koordinatensystem, also hier dem Werkstückkoordinatensystem (xw, yw, zw) wieder.

Nunmehr werden in einem letzten Schritt die Antastpunkte (pe2) mit zugehörigen Normalenvektoren, die normal auf die Werkstückoberfläche zeigen (nicht gezeigt) definiert. Dies kann manuell geschehen, indem die entsprechenden Daten vom Bediener des Koordinatenmeßgerätes eingegeben werden. Die abzutastenden Punkte mit den zugehörigen Normalenvektoren können natürlich auch automatisch über ein Makro erzeugt werden. Für die andere Ebene (e1), die in Figur 3 nicht zu sehen ist, wird hierbei vollkommen analog vorgegangen.

Die besagten Daten, also die Ablage des Geometrieelement-Koordinatensystems (xe1,ye1,ze1; xe2,ye2,ze2) in Form des Vektors ($\vec{ve1}$; $\vec{ve2}$), die Ausrichtung des Geometrieelement-Koordinatensystems gegenüber dem Referenz-Koordinatensystem (xw, yw, zw) in Form des Normalenvektors ($\vec{ne1}$; $\vec{ne2}$) und der Richtungsvektoren ($\vec{le1}$, $\vec{me1}$; $\vec{le2}$, $\vec{me2}$), sowie die einzelnen abzutastenden Punkte (pe1; pe2) mit Normalenvektoren (hier nicht gezeigt) werden ebenfalls in entsprechenden dafür vorgesehenen Listen im Speicher des Rechners (16) als Listeneintrag abgelegt.

Nachdem nunmehr alle Geometrieelemente, die zur Erfassung des einen Prüfmerkmals notwendig sind, eingegeben und abgespeichert wurden werden, wie bereits oben beschrieben, zur Verfahrwegs-Generierung die einzelnen Geometrieelemente in einen Gesamtfahrweg eingebunden.

Hierzu müssen in einem ersten Vorgang die bezogen auf die einzelnen Geometrieelemente-Koordinatensysteme (xk1,yk1,zk1; xk2,yk2,zk2; xe1,ye1,ze1; xe2,ye2,ze2) abgespeicherten abzutastenden Punkte zunächst auf ein gemeinsames Referenz-Koordinatensystem, beispielsweise das Maschinen-Koordinatensystem oder das Werkstückkoordinatensystem (xw,yw, zw) umgerechnet werden, was jedoch keinerlei Problem darstellt, nachdem die Ablage und die Ausrichtung der Geometrieelemente-Koordinatensysteme gegenüber dem Referenzkoordinatensystem (xw,yw,zw) bekannt ist. In einem nächsten Schritt werden nunmehr zwischen den einzelnen abzutastenden Geometrieelementen (k1,k2,e1,e2) nunmehr entweder manuell die Verfahrwege definiert oder aber ebenfalls automatisch generiert, wie dies rein beispielhaft in unserem US Patent Nr. 5,491,638 beschrieben ist.

Nachdem der Verfahrweg nunmehr fertiggestellt ist, kann die Messung durchgeführt werden und die hierbei ermittelten Meßergebnisse entsprechend ausgewertet werden.

Wie bereits eingangs erwähnt, kommt es nunmehr aber häufig vor, daß beispielsweise unterschiedliche Teile einer Teilefamilie leicht voneinander differieren und daß deshalb bei bisher bekannten Koordinatenmeßgeräten hierfür für die sich ändernden Geometrien neue Geometrieelemente gemeinsam mit den hierauf abzutastenden Punkten neu definiert werden mußten, um die Änderungen durchzuführen. Im Gegensatz hierzu ist eine derartige Änderung mit dem erfindungsgemäßen Verfahren hingegen sehr leicht möglich, wie dies sehr eindrucksvoll anhand von Figur 4 veranschaulicht werden soll.

Figur 4 zeigt ein gegenüber Figur 3 leicht verändertes Werkstück, bei dem die Lage und die Größe der Bohrung (b2) gegenüber dem ursprünglichen Werkstück (12) geändert wurde. Um die oben bezeichnete Meßaufgabe lösen zu können, muß in einem geänderten Meßablauf deshalb der Mittelpunkt (mk2) des Geometrieelementes "Kreis" (k2) um den Vektor ($\vec{vw}$) verschoben werden und der Radius (rk2) des Kreises (k2) um den Betrag (drk2) vergrößert werden.

Da das betreffende'abzutastende Geometrieelement, nämlich der Kreis (k2), mit einem eigenen Geometrieelement-Koordinatensystem (xk2, yk2, zk2) definiert wurde, kann die Änderung der Position des Geometrieelementes und der hierauf abzutastenden Punkte (Pk2) nunmehr sehr einfach realisiert werden. Hierzu werden die Parameter hinsichtlich der Ablage des Geometrieelement-Koordinatensystems (xk2,yk2, zk2) gegenüber dem Referenz-Koordinatensystem, (xw, yw, zw) also der Vektor ($\vec{vk2}$) derart geändert, daß der neue Vektor ($\vec{vk2}$) um den entsprechenden Vektor ($\vec{vw}$) verändert ist. Da die abzutastenden Punkte (Pk2) in einer festen räumlichen Beziehung zum Geometrieelement-Koordinatensystem stehen, werden diese hierdurch automatisch mitverschoben.

Weiterhin wird in der Änderung gemäß Figur 4 der Parameter (rk2), der den Radius des abzutastenden Kreises festlegt, um den Betrag (drk2) vergrößert. Hierbei tritt folgendes Problem auf:

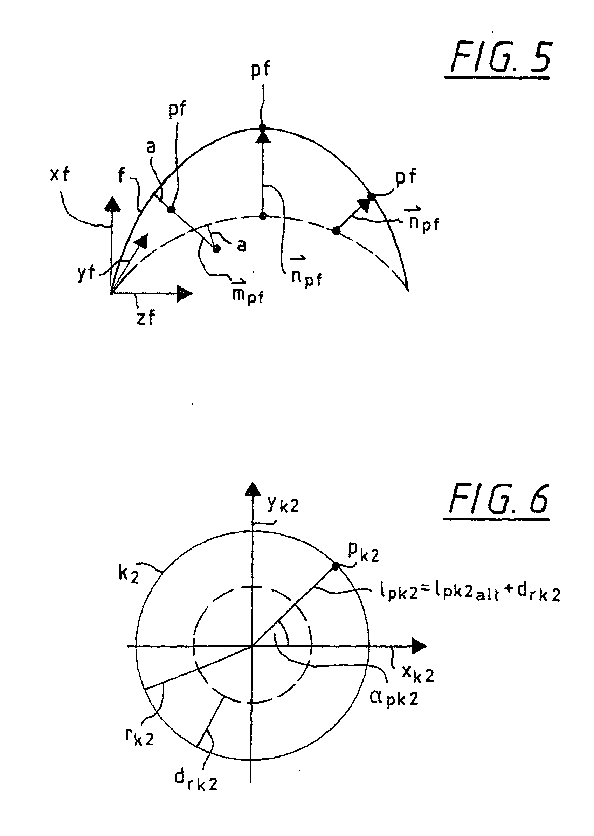

Durch die Veränderung der Dimensionen des Geometrieelementes befinden sich nunmehr die abzutastenden Punkte (pk2) nicht mehr auf der Kreislinie des Kreises (k2), sodaß diese nunmehr neu generiert werden müßten. Dies ist insbesondere dann umständlich, wenn die Punkte (pk2) nicht über ein Makro erzeugt wurden, sondern manuell eingegeben wurden. Wie dieses Problem vorteilhaft gelöst werden kann, wird nun mehr anhand von Figuren 5 und 6 erläutert.

In Figur 5, ist hierzu als beispielhaftes Geometrieelement eine Freiformfläche (f) im Schnitt dargestellt, wobei die durchgezogene Linie hierbei die geänderte Geometrie beschreibt und die strichlinierte Linie die vorherige Kontur beschreibt. Um nun zu erreichen, daß bei einer derartigen Änderung des Geometrieelementes die abzutastenden Punkte (pf) entsprechend an die Dimensionen des geänderten Geometrieelementes angepaßt werden, werden die abzutastenden Punkte (pf) derart gegenüber dem Geometrieelement-Koordinatensystem (xf, yf, zf) der Freiformfläche (f) verschoben, daß der Lotrechte Abstand (a) zur Freiformfläche (f) konstant bleibt. Dazu wird zunächst der lotrechte Abstand (a) zur ursprünglichen Freiformfläche ermittelt, indem ausgehend vom abzutastenden Punkt (pf) ein Lot auf die Freiformfläche gefällt wird, und dann der Abstand (a) zwischen dem abzutastenden Punkt (pf) und dem Schnittpunkt des Lotes mit der Freiformfläche berechnet wird. Bei Punkten, die auf dem Geometrieelement liegen, kann dieser Schritt natürlich entfallen, da der lotrechte Abstand hierbei genau Null ist.

In einem nächsten Schritt wird vom ursprünglichen Punkt ein Normalenvektor ($\overrightarrow{npf}$) auf die geänderte Freiformfläche (f) erzeugt, damit also ein Lot auf die geänderte Freiformfläche (f) gefällt und der Punkt solange entlang diesen Normalenvektor verschoben, bis er wieder den Abstand (a) aufweist.

Die beschriebene Vorgehensweise kann rein prinzipiell bei allen Geometrieelementen angewendet werden, bei denen eine Änderung der Dimensionen des Geometrieelementes zur Folge hat, daß sich die abzutastenden Punkte nicht mehr auf der Fläche bzw. der Linie des Geometrieelementes befinden. Die entsprechenden Geometrieelemente wären die Kurve, die Freiformfläche, der Kreis, die Ellipse, der Zylinder, der Torus, der Paraboloid, der Kegel und die Kugel. Die Tatsache jedoch, daß die Punkte immer in lotrechter Richtung auf das geänderte Geometrieelement verschoben werden, kann jedoch zur Folge haben, daß sich die Punkteverteilung der abzutastenden Punkte auf dem betreffenden Geometrieelement unerwünscht ändert. Bei einem Kegel beispielsweise, bei dem die Höhe oder der den Kegel definierende Kreis im Radius verändert wird, würde sich die Steigung der Mantellinie verändern und ein entsprechend verschobener abzutastender Punkt auf dem geänderten Geometrieelement in einer anderen Höhe liegen als der ursprünglich abzutastende Punkt.

Bei Geometrieelementen, die genau bezüglich einer Achse rotationssymmetrisch sind, wählt man deshalb die Verschieberichtung der abzutastenden Punkte radial zu der betreffenden Symmetrieachse. Unter radial soll hierbei die Richtung derjenigen Geraden gemeint sein entlang der der Abstand zwischen Punkt und Symmetrieachse minimal ist. Bei derartigen Geometrieelementen handelt es sich beispielsweise um den Kreis, den Zylinder, den Paraboloid, den Kegel sowie den Torus. Diese Vorgehensweise hat nachfolgend genannte besonderen Vorteile. Zunächst einmal muß ausgehend vom abzutastenden Punkt des ursprünglichen Geometrieelementes kein Lot auf das geänderte Geometrieelement gefällt werden, sodaß hierdurch Rechenzeit gespart wird. Außerdem kann hierdurch sichergestellt werden, daß insbesondere bei den Elementen Zylinder, Paraboloid und Kegel die abzutastenden Punkte immer auf ein und derselben Höhe auf dem Geometrieelement bleiben.

Wie die Punkte des Kreises (k2) aus dem Meßbeispiel gemäß Figuren 3 und 4 nunmehr konkret bei einer Radiusänderung des Kreis (k2) an die geänderten Dimensionen des Kreises (k2) angepaßt werden, soll nunmehr im Zusammenhang mit Figur 6 nachgetragen werden. Wie aus Figur 6 zu sehen ist, zeigt der strichliniert gezeichnete Kreis die Abmessungen des ursprünglichen Kreises (k2). Der abzutastende Punkt (pk2) befand sich ursprünglich unmittelbar auf der Kreislinie des Kreises (k2) und wird nunmehr einfach in radialer Richtung von der Symmetrieachse, die wie oben bereits beschrieben identisch mit der Z-Achse des entsprechenden Geometrieelement-Koordinatensystems (xk2, yk2, zk2) übereinstimmt, wegbewegt und zwar um den Betrag der Radiusänderung (drk2). Hierdurch bleibt der lotrechte Abstand des Punktes (pk2) von dem Geometrieelementkreis (k2) nach wie vor Null.

Nicht gezeigt in dem Ausführungsbeispiel nach Figuren 3 und 4 wurde die dritte Variante, bei der das Geometrieelement Kreis (k2) bei einer Änderung des zu vermessenden Werkstückes rotiert werden muß. Wie jedoch bereits oben beschrieben, erfolgt eine Anpassung der auf dem Geometrieelement abzutastenden Punkten an ein rotiertes Geometrieelement sehr einfach, indem die Ausrichtung des Geometrieelement-Koordinatensystems entsprechend angepaßt wird, d.h. die Vektoren ($\overrightarrow{nk2}$, $\overrightarrow{tk2}$) und damit gleichzeitig das Geometrieelement-Koordinatensystem (xk2,yk2,zk2) entsprechend rotiert wird. Da die auf dem Geometrieelement abzutastenden Punkte in einer festen räumlichen Beziehung zum Geometrieelement-Koordinatensystem stehen, werden diese bei der des Rotation des Geometrieelement-Koordinatensystem natürlich automatisch mitrotiert.

**Patentansprüche**

1. Koordinatenmeßgerät umfassend

   - einen in den Koordinatenrichtungen verfahrbaren Taster zum Abtasten eines Werkstückes;

- eine Mechanik mit Antrieben, über die dieser Taster verfahren wird;
- eine Steuereinheit zur Steuerung der Mechanik mit einem Speicher, in dem zur Definition der auf dem Werkstück abzutastenden Punkte (pk2) unter anderem Parameter über Geometrieelemente umfassend Punktparameter über auf den entsprechenden Geometrieelementen abzutastende Punkte abgespeichert sind,

**dadurch gekennzeichnet, daß**

die Punktparameter bezogen auf ein dem betreffenden Geometrieelement (k2, e2) eigenes Koordinatensystem (xk2, yk2, zk2; xe2, ye2, ze2) abgespeichert sind.

**2.** Koordinatenmeßgerät nach Anspruch 1, wobei im Speicher der Steuereinheit zusätzlich jedem Geometrieelement (k2) zugeordnet Parameter über die Ablage ($\overrightarrow{vk2}$) und/oder die Ausrichtung ($\overrightarrow{nk2}$) des Geometrieelement-Koordinatensystems gegenüber einem mehreren Geometrieelementen gemeinsamen Referenz-Koordinatensystem (xw, yw, zw) abgespeichert sind.

**3.** Koordinatenmeßgerät nach Anspruch 2, wobei in der Steuerungseinheit die Parameter im Speicher geändert werden können, und bei einer Änderung der Lage und/oder der Ausrichtung des Geometrieelementes die Parameter der Ablage und/oder der Ausrichtung des Geometrieelement-Koordinatensystems gegenüber dem Referenz-Koordinatensystem verändert werden.

**4.** Koordinatenmeßgerät nach Anspruch 1, wobei in der steuerungseinheit die Parameter im Speicher geändert werden können, und bei einer Änderung der Dimensionen des Geometrieelementes die Punktparameter automatisch an die geänderten Dimensionen derart angepaßt werden, daß der lotrechte Abstand (a) eines auf dem Geometrieelement abzutastenden Punktes (pk2) zum Geometrieelement konstant bleibt.

**5.** Koordinatenmeßgerät nach Anspruch 4, wobei in der Steuerungseinheit Geometrieelemente gespeichert sind, die genau bezüglich einer Achse rotationssymmetrisch sind, wobei die abzutastenden Punkte bei einer Änderung der Dimension des Geometrieelementes derart an das geänderte Geometrieelement angepaßt werden, daß sie bezogen auf die Symmetrieachse in radialer Richtung solange verschoben werden, bis der lotrechte Abstand (a) erreicht ist.

**6.** Verfahren zur Steuerung eines Koordinatenmeßgerätes mit einem in den Koordinatenrichtungen (x,y,z) verfahrbaren Taster zum Abtasten eines Werkstückes (12), wobei zur Definition der auf dem Werkstück abzutastenden Punkte (pk1,pk2, pe1,pe2) unter anderem Parameter über Geometrieelemente umfassend Punktparameter über auf den entsprechenden Geometrieelementen abzutastende Punkte abgespeichert sind, **dadurch gekennzeichnet, daß** die Punktparameter bezogen auf ein dem betreffenden Geometrieelement (k2, e2) eigenes Koordinatensystem (xk2, yk2, zk2; xe2, ye2, ze2) abgespeichert sind.

**7.** Verfahren zur Steuerung eines Koordinatenmeßgerätes gemäß Anspruch 6, wobei zusätzlich zu jedem Geometrieelement (k2) zugeordnet Parameter über die Ablage ($\overrightarrow{vk2}$) und/oder die Ausrichtung ($\overrightarrow{nk2}$) des Geometrieelement-Koordinatensystems gegenüber einem mehreren Geometrieelementen gemeinsam Referenzkoordinatensystem (xw, yw, zw) abgespeichert sind.

**8.** Verfahren nach Anspruch 7, wobei bei einer Änderung der Lage und/oder der Ausrichtung des Geometrieelementes die Parameter der Ablage und/oder der Ausrichtung des Geometrieelement-Koordinatensystems gegenüber dem Referenzkoordinatensystem verändert werden.

**9.** Koordinatenmeßgerät nach Anspruch 6, wobei bei Änderung der Dimensionen des Geometrieelementes die Punktparameter automatisch an die geänderten Dimensionen derart angepaßt werden, daß der lotrechte Abstand (a) eines auf dem Geometrieelement abzutastenden Punktes (pk2) zum Geometrieelement konstant bleibt.

**10.** Verfahren nach Anspruch 9, wobei als Geometrieelemente Geometrieelemente abgespeichert sind, die genau bezüglich einer Achse rotationssymmetrisch sind, wobei bei einer automatischen .Anpassung an die geänderten Dimensionen des Geometrieelementes die Punkte radial bezogen auf die Symmetrieachse solange verschoben werden, bis der besagte lotrechte Abstand (a) des auf dem Geometrieelement abzutastenden Punktes erreicht ist.

**Claims**

**1.** Coordinate measurement device comprising

- a measuring probe which can be moved in the coordinate directions in order to scan a workpiece;
- a mechanism with drives by means of which this measuring probe can be moved;
- a control unit for controlling the mechanism having a memory in which, in order to define the points (pk2) to be scanned on the workpiece, inter alia, parameters relating to geometry elements comprising point parameters relating to points to be scanned on the corresponding geometry elements are stored, **characterized in that** the point parameters are stored with respect to a coordinate system (xk2, yk2, zk2; xe2, ye2, zi) which is particular to the respective geometry element (k2, e2).

2. Coordinate measurement device according to Claim 1, in which parameters relating to the storage ($\overrightarrow{vk2}$) and/or the orientation ($\overrightarrow{nk2}$) of the geometry element coordinate system with respect to a reference coordinate system (xw, yw, zw) which is common to a plurality of geometry elements are additionally stored in the memory of the control unit with an assignment to each geometry element (k2).

3. Coordinate measurement device according to Claim 2, in which the parameters in the memory in the control unit can be changed and when there is a change in the position and/or the orientation of the geometry element the parameters of the storage and/or of the orientation of the geometry element coordinate system with respect to the reference coordinate system are changed.

4. Coordinate measurement device according to Claim 1, in which the parameters in the memory in the control unit can be changed and when there is a change in the dimensions of the geometry element the point parameters are automatically adapted to the changed dimensions in such a way that the perpendicular distance (a) of a point (pk2) to be scanned on the geometry element remains constant with respect to the geometry element.

5. Coordinate measurement device according to Claim 4, in which geometry elements which are precisely rotationally symmetrical with respect to an axis are stored in the control unit, the points to be scanned being adapted, when there is a change in the dimension of the geometry element, to the changed geometry element in such a way that they are displaced in the radial direction with respect to the axis of symmetry until the perpendicular distance (a) is reached.

6. Method for controlling a coordinate measurement device having a measuring probe which can be moved in the coordinate directions (x, y, z) in order to scan a workpiece (12), inter alia, parameters relating to geometry elements comprising point parameters relating to points to be scanned on the corresponding geometry elements being stored for the purpose of defining the points (pk1, pk2, pe1, pe2) to be scanned on the workpiece, **characterized in that** the point parameters are stored with respect to a coordinate system (xk2, yk2, zk2; xe2, ye2, ze2) which is particular to the respective geometry element (k2, e2).

7. Method for controlling a coordinate measurement device according to Claim 6, in which parameters relating to the storage ($\overrightarrow{vk2}$) and/or the orientation ($\overrightarrow{nk2}$) of the geometry element coordinate system with respect to a reference coordinate system (xw, yw, zw) which is common to a plurality of geometry elements are additionally stored with an assignment to each geometry element (k2).

8. Method according to Claim 7, in which, when there is a change in the position and/or the orientation of the geometry element, the parameters of the storage and/or of the orientation of the geometry element coordinate system with respect to the reference coordinate system are changed.

9. Coordinate measurement device according to Claim 6, in which, when there is a change in the dimensions of the geometry element, the point parameters are automatically adapted to the changed dimensions in such a way that the perpendicular distance (a) of a point (pk2) to be scanned on the geometry element remains constant with respect to the geometry element.

10. Method according to Claim 9, in which geometry elements which are precisely rotationally symmetrical with respect to an axis are stored as geometry elements, and when there is an automatic adaptation to the changed dimensions of the geometry element the points are displaced radially with respect to the axis of symmetry until the aforesaid perpendicular distance (a) from the point to be scanned on the geometry element is reached.

**Revendications**

1. Appareil de mesure de coordonnées comprenant

   - un palpeur qui peut être déplacé dans les directions des coordonnées pour palper une pièce à usiner ;
   - un mécanisme comprenant des entraînements à l'aide desquels ce palpeur peut être déplacé ;
   - une unité de commande pour commander le mécanisme comprenant une mémoire dans laquelle sont notamment enregistrés, pour définir les points (pk2) à palper sur la pièce à usiner, des paramètres sur des éléments géométriques comprenant les paramètres des points sur les points à palper sur les éléments géométriques correspondants,

**caractérisé en ce que**

les paramètres des points sont enregistrés par rapport à un système de coordonnées (xk2, yk2, zk2, xe2, ye2, ze2) propre à l'élément géométrique concerné (k2, e2).

2. Appareil de mesure de coordonnées selon la revendication 1, avec lequel des paramètres associés sur la déviation ($\overrightarrow{vk2}$) et/ou l'orientation ($\overrightarrow{nk2}$) du système de coordonnées de l'élément géométrique par rapport à un système de coordonnées de référence (xw, yw, zw) commun à plusieurs éléments géométriques sont enregistrés en plus de chaque élément géométrique (k2) dans la mémoire de l'unité de commande.

3. Appareil de mesure de coordonnées selon la revendication 2, avec lequel les paramètres dans la mémoire peuvent être modifiés dans l'unité de commande et, en cas de modification de la position et/ou de l'orientation de l'élément géométrique, les paramètres de la déviation et/ou de l'orientation du système de coordonnées de l'élément géométrique sont modifiées par rapport au système de coordonnées de référence.

4. Appareil de mesure de coordonnées selon la revendication 1, avec lequel les paramètres dans la mémoire peuvent être modifiés dans l'unité de commande et, en cas de modification des dimensions de l'élément géométrique, les paramètres des points sont automatiquement adaptés aux dimensions modifiées de manière à ce que l'écart vertical (a) entre un point à palper (pk2) sur l'élément géométrique et l'élément géométrique reste constant.

5. Appareil de mesure de coordonnées selon la revendication 4, avec lequel sont enregistrés dans l'unité de commande des éléments géométriques qui présentent une symétrie rotationnelle parfaite autour d'un axe, les points à palper étant adaptés à l'élément géométrique modifié en cas de modification de la taille de l'élément géométrique de telle manière qu'ils sont décalés dans le sens radial par rapport à l'axe de symétrie jusqu'à atteindre l'écart vertical (a).

6. Procédé de commande d'un appareil de mesure de coordonnées comprenant un palpeur qui peut être déplacé dans les directions des coordonnées (x, y, z) pour palper une pièce à usiner (12), des paramètres sur des éléments géométriques comprenant les paramètres des points sur les points à palper sur les éléments géométriques correspondants étant notamment enregistrés pour définir les points à palper (pk1, pk2, pe1, pe2) sur la pièce à usiner, **caractérisé en ce que** les paramètres des points sont enregistrés par rapport à un système de coordonnées (xk2, yk2, zk2, xe2, ye2, ze2) propre à l'élément géométrique concerné (k2, e2).

7. Procédé de commande d'un appareil de mesure de coordonnées selon la revendication 6, avec lequel des paramètres associés sur la déviation ($\overrightarrow{vk2}$) et/ou l'orientation (nk2) du système de coordonnées de l'élément géométrique par rapport à un système de coordonnées de référence (xw, yw, zw) commun à plusieurs éléments géométriques sont enregistrés en plus de chaque élément géométrique (k2).

8. Procédé selon la revendication 7, avec lequel en cas de modification de la position et/ou de l'orientation de l'élément géométrique, les paramètres de la déviation et/ou de l'orientation du système de coordonnées de l'élément géométrique sont modifiés par rapport au système de coordonnées de référence.

9. Procédé selon la revendication 6, avec lequel en cas de modification des dimensions de l'élément géométrique, les paramètres des points sont automatiquement adaptés aux dimensions modifiées de manière à ce que l'écart vertical (a) entre un point à palper (pk2) sur l'élément géométrique et l'élément géométrique reste constant.

10. Procédé selon la revendication 9, avec lequel les éléments géométriques sont enregistrés sous la forme d'éléments géométriques qui présentent une symétrie rotationnelle parfaite autour d'un axe, avec lequel en cas d'adaptation automatique aux dimensions modifiées de l'élément géométrique, les points sont décalés dans le sens radial par rapport à l'axe de symétrie jusqu'à atteindre ledit écart vertical (a) du point à palper sur l'élément géométrique.

_FIG. 1_

## FIG.2

```
┌─────────────────────┐
│     Prüfmerkmal     │
│                     │── 17
│     definieren      │
└─────────────────────┘
          │
          ▼
┌─────────────────────┐
│  Geometrieelemente  │
│                     │── 18
│      zuordnen       │
└─────────────────────┘
          │
          ▼
┌─────────────────────┐
│     Verfahrwege     │
│                     │── 19
│     definieren      │
└─────────────────────┘
          │
          ▼
┌─────────────────────┐
│      Meßablauf      │
│                     │── 20
│     durchführen     │
└─────────────────────┘
          │
          ▼
┌─────────────────────┐
│     Prüfmerkmal     │
│                     │── 21
│      auswerten      │
└─────────────────────┘
```

FIG.3

FIG.4

FIG. 5

FIG. 6

13